## Europäisches Patentamt

## European Patent Office

## Office européen des brevets

(19)

(11) Veröffentlichungsnummer: **0 090 236**
**B1**

(12) # EUROPÄISCHE PATENTSCHRIFT

(45) Veröffentlichungstag der Patentschrift:
**17.11.88**

(51) Int. Cl.4: **H 04 N 7/13**, H 04 N 11/04

(21) Anmeldenummer: **83102467.4**

(22) Anmeldetag: **12.03.83**

(54) **System zur redundanzvermindernden digitalen Übertragung von Fernsehbildsignalen.**

(30) Priorität: **27.03.82 DE 3211323**

(43) Veröffentlichungstag der Anmeldung:
**05.10.83 Patentblatt 83/40**

(45) Bekanntmachung des Hinweises auf die Patenterteilung:
**17.11.88 Patentblatt 88/46**

(84) Benannte Vertragsstaaten:
**AT DE FR GB NL**

(56) Entgegenhaltungen:
DE - A - 2 703 854
FR - A - 2 206 639
FR - A - 2 320 017
FR - A - 2 474 797
GB - A - 2 069 294

ELECTRONICS & COMMUNICATIONS IN JAPAN, Band 64, Nr. 12, Dezember 1981, Seiten 51-60, Scripta Publishing Co., Silver Spring, Maryland, US; K. YANAKA et al.: "Image bandwidth compression by pre-compensative interpolation"

(73) Patentinhaber: **ALCATEL N.V.,**
**Strawinskylaan 537 (World Trade Center), NL-1077 XX Amsterdam (NL)**

(84) Benannte Vertragsstaaten: **FR GB NL AT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Hentschke, Siegbert, Dr., Uracher Weg 3, D-7146 Tamm (DE)**

(74) Vertreter: **Graf, Georg Hugo, Dipl.-Ing. et al, Standard Elektrik Lorenz AG Patent- und Lizenzwesen Postfach 30 09 29, D-7000 Stuttgart 30 (DE)**

## Beschreibung

Die Erfindung betrifft ein System nach dem Oberbegriff des Patentanspruchs 1.

Ein derartiges System ist bekannt aus der DE-A-3 104 439. Es wird dort bei jedem zweiten Abtastwert mit 8 Bits in horizontaler und vertikaler Richtung dieser Abtastwert und eine von dessen Umgebung abhängige Steuerinformation von 2 Bits, also eine Bitgruppe von 10 Bits übertragen, so dass auf der Übertragungsstrecke die Datenübertragungsgeschwindigkeit im Verhältnis 8 : 5 herabgesetzt ist. Empfangsseitig werden die fehlenden Abtastwerte aus den übertragenen Abtastwerten und den Steuerinformationen, also aus den übertragenen Bitgruppen, näherungsweise rekonstruiert.

Für viele Anwendungsfälle ist eine Herabsetzung der Datenübertragungsgeschwindigkeit im Verhältnis 8 : 5 nicht geeignet oder nicht ausreichend. Soll beispielsweise ein digitales Fernsehübertragungssystem die Übertragungsstrecken bereits bestehender oder geplanter digitaler Nachrichtennetze verwenden, so ist die Übertragungsgeschwindigkeit des digitalen Bildsignals nicht in erster Linie nach Gesichtspunkten der Übertragungsqualität wählbar, sondern muss an die vorgegebenen Übertragungsgeschwindigkeiten des Netzes angepasst werden. Dabei ist es bisweilen notwendig, die Übertragungsgeschwindigkeit der digitalen Bildsignale auf der Übertragungsstrecke gegenüber der durch die Abtastfrequenz vorgegebenen Geschwindigkeit auf die Hälfte herabzusetzen.

Es ist daher die Aufgabe, ein System der eingangs genannten Art anzugeben, das die Datenübertragungsgeschwindigkeit der digitalen Bildsignale auf der Übertragungsstrecke auf die Hälfte herabsetzt und dabei die Qualität der übertragenen Bilder nicht wesentlich beeinträchtigt. Dabei soll der Schaltungsaufwand auf der Sende- und Empfangsseite in vertretbaren Grenzen gehalten werden.

Die Aufgabe wird wie im Patentanspruch 1 angegeben gelöst. Vorteilhafte Ausgestaltungen und Weiterbildungen ergeben sich aus den abhängigen Ansprüchen.

Es sei darauf hingewiesen, dass die Filterung von Bildsignalen unter Beeinflussung der Auflösungseigenschaften an sich nicht neu ist. Aus der Veröffentlichung von B. Wendland: «Konzepte für ein kompatibles Hifi-Fernsehsystem, NTG-Fachberichte, Band 1974, Text- und Bildkommunikation, Sept. 1980» ist bekannt, dass man durch Einführung eines diagonalen Abtastrasters («Offsetabtastung») bei Übertragung sämtlicher Abtastwerte und geeigneter diagonaler Frequenzbandbegrenzung die horizontale Bildauflösung um den Faktor zwei verbessern kann.

Dagegen wird bei der Erfindung das diagonale Abtastraster und die diagonale Frequenzbandbegrenzung dazu verwendet, um bei einer Halbierung der Anzahl der übertragenen digitalen Werte die Bildqualität nicht wesentlich zu beeinträchtigen. Erfindungsgemäss wird die Filterung so durchgeführt, dass die horizontale und die vertikale Auflösung weitgehend erhalten bleibt und lediglich die Auflösung in den beiden diagonalen Bildrichtungen vergröbert wird.

Bevorzugt anwendbar ist die Erfindung auf die Chrominanzsignale U und V, auch Farbdifferenzsignale genannt, des Farbfernsehbildes. Gemäss der CCIR-Empfehlung AA/11, Dokument Nr. 11/398-E vom 05.10.1981 für die Farbfernsehübertragung sollen diese Chrominanzsignale U und V jeweils mit 6,75 MHz abgetastet und mit acht Bits pro Abtastwert linear codiert werden. Wünschenswert ist, alle Fernsehsignale (einschliesslich Tonsignale) zu einem 140 Mbit/s-Multiplexsignal zu vereinigen, das sich in einem PCM-Kanal der vierten Aufbaustufe des PCM-Netzes übertragen lässt. Dabei stellt sich bezüglich der Chrominanzsignale das Problem der Halbierung der Datenübertragungsgeschwindigkeit auf der Übertragungsstrecke ohne wesentliche Verminderung der Bildqualität.

Prinzipiell ist die Erfindung aber nicht auf die Chrominanzsignale beschränkt, sondern auch auf das Luminanzsignal des Farbfernsehbildes anwendbar.

Die Erfindung wird nun anhand der Zeichnungen beispielsweise näher erläutert.

Es zeigen:

Fig. 1 das Prinzip der digitalen Filterung des erfindungsgemässen Systems anhand von Transformationen im Abtasttransfer des zu filternden Signals,

Fig. 2 ein Blockschaltbild des Sendefilters und

Fig. 3 ein Blockschaltbild des Empfangsfilters.

Bezeichnet man im Abtastraster des zu verarbeitenden Bildsignals, beispielsweise des Chrominanzsignals U, die Spalten mit dem Index j und die Zeilen mit dem Index i, die ursprünglichen Abtastwerte mit $X_i^j$, die übertragenen Werte mit $C_i^j$ und die empfangsseitig rekonstruierten Werte mit $X_i'^j$, so lässt sich die Operation des Sendefilters wie folgt darstellen.

$$C_{2i}^{2j} = \frac{1}{8}X_{2i}^{2j-1} + \frac{1}{2}X_{2i}^{2j} + \frac{1}{8}X_{2i}^{2j+1} + \frac{1}{4}X_{2i+1}^{2j} \tag{1}$$

$$C_{2i+1}^{2j+1} = \frac{1}{8}X_{2i+1}^{2j} + \frac{1}{2}X_{2i+1}^{2j+1} + \frac{1}{8}X_{2i+1}^{2j+2} + \frac{1}{4}X_{2i+2}^{2j+1} \tag{2}$$

$$C_{2i+1}^{2j} = C_{2i}^{2j+1} = 0 \tag{3}$$

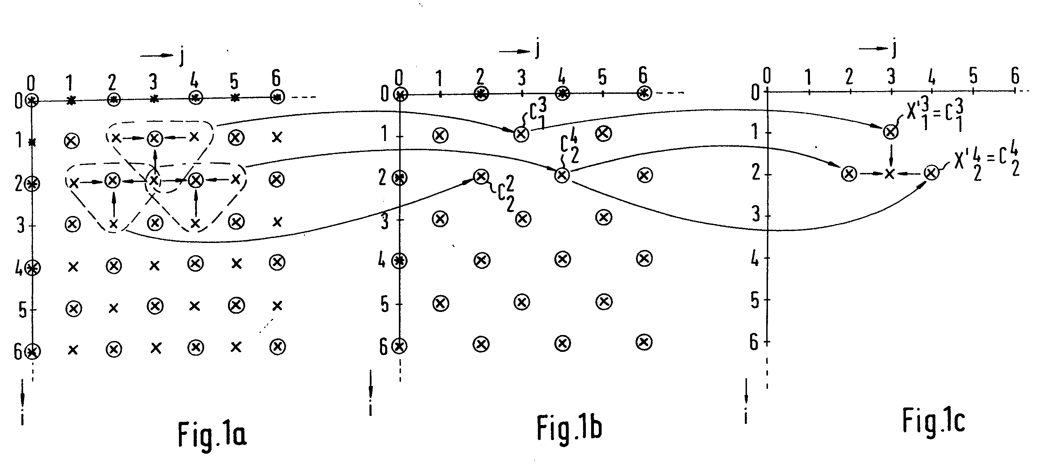

Dies bedeutet, dass in jeder Zeile und in jeder Spalte nur an Stelle jedes zweiten der Abtastwerte $X_i^j$ ein von Null verschiedener Wert errechnet und ausgesendet wird, der gleich einer Summe von Bruchteilen dieses Abtastwertes und Abtastwerten von diesen umgebenden Bildpunkten ist. Genauer gesagt ergibt sich diese Summe aus der Hälfte des Abtastwertes, an dessen Stelle sie ausgesendet wird, aus einem Achtel des Abtastwertes des linken und einem Achtel des Abtastwertes des rechten Nachbarbildpunktes und einem Viertel des Abtastwertes des darunterliegenden Bildpunktes. Die Summenbildung ist in Fig. 1a veranschaulicht worin die Abtastwerte, an deren Stelle eine solche Summe ausgesendet wird durch einen Kreis gekennzeichnet sind. Die Summe wird jeweils in Form einer Bitgruppe mit der gleichen Bitanzahl der ursprünglichen Abtastwerte, also mit acht Bit, übertragen, und an Stelle der nicht eingekreisten Abtastwerte wird keine Information übertragen, was in Fig. 1b) gezeigt ist. Somit ist die Datenübertragungsgeschwindigkeit des verarbeiteten Bildsignals auf die Hälfte herabgesetzt.

In einem empfangsseitigen Filter werden die Bildpunkte im ursprünglichen Abtastraster wie in Fig. 1c) gezeigt näherungsweise rekonstruiert gemäss den Transformationen:

$$X'^{2j}_{2i} = C^{2j}_{2i} \tag{5}$$

$$X'^{2j+1}_{2i+1} = C^{2j+1}_{2i+1} \tag{6}$$

$$X'^{2j+1}_{2i} = \frac{1}{4} C^{2j}_{2i} + \frac{1}{4} C^{2j+2}_{2i} + \frac{1}{2} C^{2j+1}_{2i-1} \tag{7}$$

$$X'^{2j}_{2i+1} = \frac{1}{4} C^{2j-1}_{2i+1} + \frac{1}{4} C^{2j+1}_{2i+1} + \frac{1}{2} C^{2j}_{2i} \tag{8}$$

Dies bedeutet, dass die übertragenen Bitgruppen $C^{2j}_{2i}$ und $C^{j+1}_{2i+1}$ an den entsprechenden Bildpunkten identisch übernommen werden und dass die dazwischenliegenden Bildpunkte als Summe von Zahlenanteilen berechnet werden, die für benachbarte Bildpunkte empfangen worden sind. Genauer gesagt ergibt sich der Wert für einen einzufügenden Bildpunkt als Summe aus der Hälfte des Zahlenwertes, der für den darüberliegenden Bildpunkt empfangen wurde, einem Viertel des für den linken Nachbarbildpunkt empfangenen Zahlenwertes und einem Viertel des für den rechten Nachbarbildpunkt empfangenen Zahlenwerts. Fig. 1c veranschaulicht dies am Beispiel der Rekonstruktion des Bildpunktes $X'^3_2$. Auf die am Bildrand durchzuführende Operation soll hier nicht näher eingegangen werden. Es gibt eine Vielzahl von Möglichkeiten, um dem Filter die für die Transformationen benötigten aber nicht vorhandenen Werte in Form von Ersatzwerten zur Verfügung zu stellen, beispielsweise die zyklische Verwendung von Werten oder die Vorbesetzung von Speicherplätzen mit geeigneten Werten. Welche Möglichkeit zu wählen ist, hängt grösstenteils ab vom subjektiven Bildeindruck, den der Betrachter haben soll.

Simulationsergebnisse haben gezeigt, dass mit der beschriebenen digitalen Filterung, die das übertragene Bild durch die Kombination des Sendefilters und des Empfangsfilters erfährt, die Grenzfrequenz für Bildstrukturen in den diagonalen Bildrichtungen etwa um den Faktor 2 vermindert, jedoch die Grenzfrequenz für Bildstrukturen in horizontaler und vertikaler Bildrichtung nur unwesentlich verringert wird. Dies bedeutet eine Vergröberung der Bildauflösung in den diagonalen Richtungen um denselben Faktor bei nur geringer Vergröberung der horizontalen und vertikalen Bildauflösung. Eine solche Verminderung der Bildqualität zugunsten einer Halbierung der Datenübertragungsgeschwindigkeit kann aber durchaus hingenommen werden, da die diagonale Bildauflösung des ursprünglichen Bildes im Vergleich zur horizontalen und vertikalen Auflösung ohnehin günstiger ist.

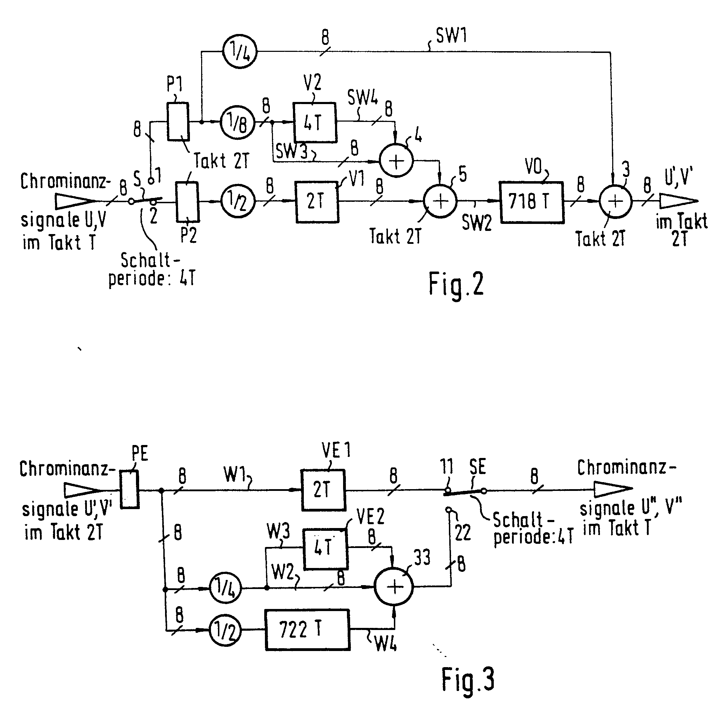

Im folgenden wird anhand der Figuren 2 und 3 die Realisierung des Sende- und Empfangsfilters mit den beschriebenen Eigenschaften erläutert.

Um den Schaltungsaufwand auf der Sende- und Empfangsseite möglichst gering zu halten, wird das Sendefilter ebenso wie das Empfangsfilter im Zeitmultiplexbetrieb zur Filterung beider Chrominanzsignale U und V verwendet. Am Eingang des Sendefilters nach Fig. 2 treffen also die Abtastwerte der beiden Chrominanzsignale abwechselnd im Takt T ein, wobei T die halbe Abtastperiode jedes einzelnen Signals ist. Mittels eines Schalters S lassen sich die ankommenden Abtastwerte zu einem Anschluss 1 oder einem Anschluss 2 des Sendefilters durchschalten. Der Schalter wird mit einer Schaltperiode von 4T derart geschaltet, dass er jeweils zwei ankommende Abtastwerte zum Anschluss 1 und zwei darauffolgend ankommende Abtastwerte zum Anschluss 2 durchschaltet. Von den Anschlüssen 1 und 2 gelangen die Abtastwerte in Pufferspeicher P1 und P2, die mit einem Takt der Periode 2T, also im Abtasttakt, ausgelesen werden. Somit gilt für jedes Chrominanzsignal folgendes:

Die in Abständen von 2T eintreffenden Abtastwerte erscheinen abwechslungsweise am Ausgang von P1 und am Ausgang von P2 jeweils in Abständen von 4T, wobei zeitlich in der Mitte zwischen zwei Abtastwerten des einen Chrominanzsignals ein Abtastwert des anderen Chrominanzsignals erscheint. Wie Fig. 1a zeigt, sind die Abtastwerte X, an deren Stelle eine Bitgruppe C ausgesendet wird, von einer Zeile zur nächsten um eine Abtastperiode gegeneinander versetzt, d.h. in einer Zeile werden bei den geradzahlig numerierten Abtastwerten Bitgruppen C ausgesendet und in der nächsten Zeile bei den ungeradzahlig numerierten Abtastwerten.

Diese unterschiedliche Behandlung der Abtastwerte aufeinanderfolgender Zeilen ergibt sich entweder dadurch, dass man die Anzahl der Abtastwerte pro Zeile ungeradzahlig wählt, oder dass man bei gerader Anzahl der Abtastwerte pro Zeile zu Beginn jeder neuen Zeile die Phase des Schalttakts des Schalters S um eine halbe Schaltperiode, d.h. um eine Abtastperiode verschiebt.

Bezogen auf Fig. 1a) folgt daraus, dass z.B. der Abtastwert $X_3^2$ am gleichen Anschluss erscheint wie die Abtastwerte $X_2^3$ und $X_2^1$ wogegen der Abtastwert $X_2^2$ am anderen Anschluss erscheint und dass relativ zum Zeitpunkt des Erscheinens von $X_3^2$ die Abtastwerte $X_2^3$ und $X_2^1$ um eine Zeilenperiode abzüglich bzw. zuzüglich einer Abtastperiode und der Abtastwert $X_2^2$ um eine Zeilenperiode verfrüht erscheinen. Diese Werte müssen also gegenüber $X_3^2$ um die genannten Zeitdifferenzen verzögert werden.

Dementsprechend hat das Sendefilter vier Signalwege SW1 bis SW4, wobei die Werte in den Signalwegen SW1 bis SW3 um diese Verzögerungszeiten gegenüber dem Wert im Signalweg SW1 verzögert werden. Die Werte in den Signalwegen werden gemäss den Gleichungen (1) und (2) mit den geeigneten Faktoren multipliziert und addiert, so dass der auszusendende Wert entsteht. Die vier Signalwege sind die folgenden:

Vom Anschluss 1 bzw. vom Ausgang des Pufferspeichers P1 führt ein erster Signalweg SW1, in dem die Abtastwerte durch vier dividiert werden, zu einem Ausgangsaddierer 3. (Da die Abtastwerte jeweils in Form von acht parallelen Bits verarbeitet werden, bedeutet eine solche Division eine einfache Schiebeoperation).

In einem zweiten Signalweg SW2 vom Anschluss 2 zum Ausgangsaddierer 3 werden die Abtastwerte durch zwei dividiert und um eine Zeilenperiode verzögert. Diese Verzögerung geschieht in zwei Abschnitten, einem ersten Abschnitt V1 mit der Verzögerungszeit einer Abtastperiode 2T und einem zweiten Abschnitt V0 mit der Verzögerungszeit einer Zeilenperiode abzüglich einer Abtastperiode, also mit 718 T, wenn eine Zeile eine Dauer von 720 T hat (720 Abtastwerte pro Zeile).

Zwischen den ersten Abschnitt V1 und den zweiten Abschnitt V0 ist ein Addierer 5 geschaltet. Vom Anschluss 1 bzw. vom Ausgang des Pufferspeichers P1 führt ein dritter Signalweg SW3 über einen Addierer 4, den Addierer 5 und den Verzögerungsabschnitt V0 zum Ausgangsaddierer 3, in dem eine Division durch acht und eine Verzögerung um eine Zeilenperiode abzüglich einer Abtastperiode, also um 718 T, stattfindet. In einem vierten Signalweg SW4 vom Anschluss 1 zum Ausgangsaddierer 3, findet eine Division durch acht und eine Verzögerung um 722 T, d.h. um eine Zeilenperiode zuzüglich einer Abtastperiode statt.

Der dritte und der vierte Signalweg unterscheiden sich dadurch voneinander, dass beim einen der Ausgang des Dividierers durch acht direkt mit dem Addierer 4 verbunden ist, und beim anderen über eine Verzögerungsstufe V2 mit einer Verzögerung um zwei Abtastperioden, d.h. um 4T. Der Ausgangswert des Addierers 4 gelangt zum Addierer 5, der drei der vier Summanden der gewünschten Summe gemäss den Gleichungen (1) und (2) an den Ausgangsaddierer 3 liefert.

Nach einer Zeit von 2T verarbeitet das Filter eine Gruppe von Abtastwerten des anderen Chrominanzsignals in der gleichen Weise, und wiederum nach einer Zeit von 2T verarbeitet es die nächste Gruppe von Abtastwerten des gleichen Chrominanzsignals, so dass die Filterausgangswerte der beiden Chrominanzsignale im doppelten Abstand 2T am Ausgang erscheinen, verglichen mit ihrem Abstand T am Filtereingang.

Das Empfangsfilter nach Fig. 3 arbeitet wie folgt:

Am Eingang erscheinen im Takt 2T die Ausgangswerte des Sendefilters für die beiden Chrominanzsignale U und V abwechselnd. Diese gelangen im Takt 2T in einen Pufferspeicher PE, der mit einem solchen Takt ausgelesen wird, dass zwischen zwei Werten U und V, deren Abstand am Ausgang gleich 1 ist, eine Pause von 3T bis zum darauffolgenden Wert U liegt, d.h. jeweils zwei aufeinanderfolgende Werte U und V werden vom Abstand 2T auf den Abstand T zusammengerückt, und es entsteht eine Lücke zur Einfügung zweier Werte ebenfalls im Abstand T.

Vom Ausgang des Pufferspeichers PE führt ein erster Signalweg W1 über eine Verzögerungsstufe VE1 mit einer Verzögerungszeit von einer Abtastperiode 2T zu einem ersten Anschluss 11 eines Schalters SE, dessen zweiter Anschluss 22 mit dem Ausgang eines Addierers 33 verbunden ist. Der Schalter SE wird mit einer Schaltperiode 4T zwischen den beiden Anschlüssen 11 und 22 umgeschaltet, so dass er während der ersten Halbperiode zwei Werte vom ersten Signalweg W1 und während der zweiten Halbperiode zwei Ausgangswerte des Addierers 33 zum Ausgang des Empfangsfilters durchschaltet. Somit werden zwischen jeweils zwei aufeinanderfolgend empfangene Werte für U und V jeweils zwei berechnete Werte eingefügt.

Vom Ausgang des Pufferspeichers führt ein zweiter Signalweg W2 über den Addierer 33 zum zweiten Anschluss 22 des Schalters SE, in dem die empfangenen Werte durch vier dividiert werden. In einem dritten Signalweg W3 über den Addierer 33 werden die empfangenen Werte durch vier dividiert und um zwei Abtastperioden, d.h. um 4T verzögert. Dieser Signalweg W3 wird dadurch gebildet, dass der Verbindung vom Ausgang des Teilers durch vier zum Eingang des Addierers 33 eine Verzögerungsstufe VE2 parallelgeschaltet ist.

In einem vierten Signalweg W4 vom Ausgang des Pufferspeichers PE über den Addierer 33 zum zweiten Anschluss 22 des Schalters SE werden die empfangenen Werte durch zwei geteilt und um eine Zeilenperiode zuzüglich einer Abtastperiode, also um 722T verzögert.

Liegt beispielsweise ein Empfangswert für das Chrominanzsignal U zu einem Zeitpunkt $t_0$ am Anschluss 11 des Schalters SE und befindet sich der Schalter SE in der gezeigten «oberen» Stellung so wird dieser Empfangswert zum Zeitpunkt $t_0$ zum Ausgang durchgeschaltet.

Um eine halbe Abtastperiode später, also zum Zeitpunkt $t_0 + T$ befindet sich der Schalter SE immer noch in der «oberen» Stellung, und es wird der nächste Empfangswert, der zum anderen Chrominanzsignal gehört, zum Ausgang durchgeschaltet. Zum späteren Zeitpunkt $t_0 + 2T$ wird der Schalter SE zum Anschluss 22 umgeschaltet. Gleichzeitig liegt am Ausgang des Pufferspeichers der nächste Empfangswert, der wieder zum Chrominanzsignal U gehört. Ist dies beispielsweise der Wert $C_2^4$ nach Fig. 1c), so liegen gleichzeitig die Werte $\frac{1}{4} C_2^4$, $\frac{1}{4} C_2^2$ und $\frac{1}{2} C_1^3$ an den Eingängen des Addierers 33, und es wird zu diesem Zeitpunkt $t_0 + 2T$ die Summe aus diesen Werten als Ausgangswert $X_2^3$ des Chrominanzsignals U zum Ausgang durchgeschaltet. Zum darauffolgenden Zeitpunkt $t_0 + 3T$ befindet sich der Schalter SE noch in dieser «unteren» Stellung und schaltet den in entsprechender Weise gebildeten Summenwert als nächsten Ausgangswert des Chrominanzsignals V zum Ausgang durch. Zum Zeitpunkt $t_0 + 4T$ wird der Schalter schliesslich wieder in die «obere» Stellung umgeschaltet, und der beschriebene Ablauf wiederholt sich.

Daraus ergibt sich, dass die Filter ausgangswerte U'' und V'' die gleichen Zeitabstände T und die gleiche Aufeinanderfolge wie die Abtastwerte U und V am Eingang des Sendefilters haben.

**Patentansprüche**

1. System zur digitalen Übertragung von Bildsignalen, insbesondere Fernsehbildsignalen mit einer auf der Übertragungsstrecke herabgesetzten Datenübertragungsgeschwindigkeit, dessen Sendeteil nur an Stelle jedes zweiten Abtastwertes in horizontaler und vertikaler Bildrichtung eine Bitgruppe aussendet und dessen Empfangsteil die Abtastwerte, an deren Stelle keine Information übertragen wurde, aus den übertragenen Bitgruppen näherungsweise rekonstruiert dadurch gekennzeichnet, dass die übertragene Bitgruppe sendeseitig durch digitale Filterung der ursprünglichen Abtastwerte in einem Sendefilter (Fig. 2) gewonnen wird und die gleiche Bitanzahl wie jeder Abtastwert hat und dass der Empfangsteil ein Empfangsfilter (Fig. 3) enthält, das die zu rekonstruierenden Abtastwerte durch digitale Filterung der übertragenen Bitgruppen aus diesen ableitet, wobei beide Filter gemeinsam die übertragenen Bilder derart filtern, dass die Horizontalauflösung weitgehend erhalten bleibt und die Auflösung in beiden Diagonalrichtungen vergröbert wird.

2. System nach Anspruch 1, dadurch gekennzeichnet, dass die vom Sendefilter (Fig. 2) an Stelle jedes zweiten Abtastwertes ($X2_i^j$) in horizontaler und vertikaler Richtung ausgesendete Bitgruppe einen Zahlenwert ($C2_i^j$) darstellt, der gleich der Summe von Bruchteilen des Abtastwertes ($X_{2i}^{2j}$) und Abtastwerten von diesen umgebenden Bildpunkten ist und dass das Empfangsfilter die zwischen die Bildpunkte, an deren Stelle Bitgruppen übertragen wurden, in das Empfangsbild einzuführenden Bildpunkte ($X'^{2j+1}_{2i}$) als Summe von Bruchteilen von Zahlenwerten berechnet, die für benachbarte Bildpunkte empfangen wurden (Fig. 1).

3. System nach Anspruch 2, dadurch gekennzeichnet, dass die vom Sendefilter ausgesendete Summe ($C_{2i}^{2j}$) besteht aus der Hälfte des jeweiligen Abtastwertes ($X_{2i}^{2j}$), einem Achtel des Abtastwertes des linken Nachbarpunktes ($X_{2i}^{2j-1}$), einem Achtel des Abtastwertes des rechten Nachbarpunktes ($X_{2i}^{2j+1}$) und einem Viertel des Abtastwertes des darunterliegenden Nachbarpunktes ($X_{2i+1}^{2j}$), und dass die vom Empfangsfilter berechnete Summe ($X'^{2j+1}_{2i}$, für einen einzufügenden Bildpunkt besteht aus der Hälfte des Zahlenwertes der empfangenen Bitgruppe des darüberliegenden Bildpunktes ($C_{2i-1}^{2j+1}$), aus einem Viertel des Zahlenwertes der empfangenen Bitgruppe des linken Nachbarbildpunktes ($C_{2i}^{2j}$) und einem Viertel des Zahlenwertes der empfangenen Bitgruppe des rechten Nachbarbildpunktes ($C_{2i}^{2j+2}$).

4. Sendefilter für ein System nach einem der vorstehenden Ansprüche, dadurch gekennzeichnet, dass es am Eingang einen Schalter (S) hat, der die zu filternden Abtastwerte abwechselnd zu einem ersten (1) und einem zweiten Anschluss (2) durchschaltet, dass es am Ausgang einen Ausgangsaddierer (3) hat, der in Abständen von zwei Abtastperioden des zu filternden Signals und gleichzeitig mit den Durchschaltzuständen des ersten Anschlusses (1) die durch Filterung gebildeten Bitgruppen abgibt, dass der erste Anschluss (1) mit dem Ausgangsaddierer (3) über einen ersten Signalweg (SW1) verbunden ist, in dem die durchgeschalteten Abtastwerte durch vier dividiert werden und dass der erste Anschluss (1) mit dem Ausgangsaddierer (3) über einen dritten (SW3) und einen vierten Signalweg (SW4) verbunden ist, wobei die durchgeschalteten Abtastwerte im dritten Signalweg (SW3) durch acht dividiert und um eine Zeilenperiode abzüglich einer Abtastperiode verzögert werden ($V_0$) und im vierten Signalweg (SW4) um durch acht dividiert und um eine Zeilenperiode zuzüglich einer Abtastperiode verzögert werden ($V_0$, $V_2$), und dass der zweite Anschluss (2) mit dem Ausgangsaddierer (3) über einen zweiten Signalweg (SW2) verbunden ist, in dem die durchgeschalteten Abtastwerte durch zwei dividiert und um eine Zeilenperiode verzögert werden ($V_0$, $V_1$).

5. Sendefilter nach Anspruch 4, dadurch gekennzeichnet, dass die Verzögerung um eine Zeilenperiode im zweiten Signalweg (SW2) in zwei Abschnitten erfolgt, deren erster ($V_1$) eine Verzögerung um eine Abtastperiode und deren zweiter ($V_0$) eine Verzögerung um eine Zeilenperiode abzüglich einer Abtastperiode bewirkt, dass die Verzögerung im dritten Signalweg (SW3) in diesem zweiten Verzögerungsabschnitt ($V_0$) erfolgt und dass die Verzögerung im vierten Signalweg (SW4) in einer Verzögerungsstufe ($V_2$) mit einer Verzögerungszeit von zwei Abtastperioden und in diesem zweiten Verzögerungsabschnitt ($V_0$) erfolgt.

6. Sendefilter nach Anspruch 5, dadurch gekennzeichnet, dass die unverzögerten durch acht dividierten Abtastwerte des dritten Signalweges (SW3) und die um zwei Abtastperioden ($V_2$) verzögerten durch acht dividierten Abtastwerte des vierten Signalweges (SW4) in einem ersten Addierer (4) zu Summenwerten addiert werden und dass diese Summenwerte in einem zweiten Addierer (5), der im zweiten Signalweg (SW2) zwischen dem ersten Verzögerungsabschnitt ($V_1$) und dem zweiten Verzögerungsabschnitt ($V_0$) liegt, zu den am Ausgang des ersten Verzögerungsabschnitts ($V_1$) erscheinenden durch zwei dividierten und um eine Abtastperiode verzögerten Abtastwerten des zweiten Signalweges (SW2) addiert werden.

7. Empfangsfilter für ein System nach einem der Ansprüche 1 bis 3, dadurch gekennzeichnet, dass es einen Schalter (SE) hat, der abwechselnd einen empfangenen Zahlenwert und einen berechneten Zahlenwert des gefilterten Bildsignals zum Filterausgang durchschaltet, dass ein erster Anschluss (11) des Schalters (SE) mit dem Eingang des Empfangfilters über einen Signalweg (W1), in dem die empfangenen Zahlenwerte um eine Abtastperiode verzögert werden (VE1), verbunden ist und dass ein zweiter Anschluss (22) des Schalters (SE) mit dem Ausgang eines Addierers (33) verbunden ist, dessen Eingangswerte der durch vier geteilte Eingangswert, der durch vier geteilte und um zwei Abtastperioden verzögerte Eingangswert und der durch zwei geteilte und um eine Zeilenperiode zuzüglich einer Abtastperiode verzögerte Eingangswert ist.

8. Empfangsfilter oder Sendefilter nach den Ansprüchen 7 oder einem der Ansprüche 4 bis 6, dadurch gekennzeichnet, dass es im Zeitmultiplex zur Filterung zweier gleichartiger Signale (U, V) verwendet ist.

## Claims

1. System for digitally transmitting picture signals, particularly television video signals, at a bit rate reduced on the transmission path, wherein the transmitting portion transmits a bit group only in place of every other sample value in the horizontal and vertical directions of the picture, and wherein in the receiving portion the sample values in place of which no information was transmitted are approximatively reconstructed from the transmitted bit groups, characterized in that, at the transmitting end, the transmitted bit group is obtained by digitally filtering the original sample values in a transmit filter (Fig. 2) and has the same number of bits as each of the sample values, and that the receiving portion contains a receive filter (Fig. 3) which derives the sample values to be reconstructed by digitally filtering the transmitted bit groups, the two filters filtering the transmitted pictures jointly in such a way that the horizontal resolution is substantially preserved, while the resolution in the two diagonal directions is reduced.

2. A system as claimed in Claim 1, characterized in that the bit group transmitted by the transmit filter (Fig. 2) in place of every other sample value ($X_{2i}^{2j}$) in the horizontal and vertical directions represents a numerical value ($C_{2i}^{2j}$) equal to the sum of fractions of said sample value ($X_{2i}^{2j}$) and sample values of picture elements surrounding said sample value, and that the picture elements ($X_{2i}'^{2j+1}$) to be inserted in the received picture between the picture elements in place of which bit groups were transmitted are calculated by the receive filter as sums of fractions of numerical values received for adjacent picture elements (Fig. 1).

3. A system as claimed in Claim 2, characterized in that the sum ($C_{2i}^{2j}$) transmitted by the transmit filter consists of half the respective sample value ($X_{2i}^{2j}$), one eighth of the sample value of the next element to the left ($X_{2i}^{2j-1}$), one eighth of the sample value of the next element to the right ($X_{2i}^{2j+1}$) and one quarter of the same value lying below said value ($X_{2i+1}^{2j}$), and that the sum ($X_{2i}'^{2j+1}$) calculated by the receive filter for a picture element to be inserted consists of half of the numerical value of the received bit group of the picture element lying above said element ($C_{2i-1}^{2j+1}$), one quarter of the numerical value of the received bit group of the next picture element to the left ($C_{2i}^{2j}$) and one quarter of the numerical value of the received bit group of the next picture element to the right ($C_{2i}^{2j+2}$).

4. Transmit filter for a system as claimed in any one of the preceding claims, characterized in that it has an input switch (S) which transfers the sample values to be filtered to a first terminal (1) and a second terminal (2) in turn, that it has an output adder (3) by which the bit groups formed by filtering are delivered at intervals of two sampling periods of the signal to be filtered and simultaneously with the "on" states of the first terminal (1), that the first terminal (1) is connected to the output adder (3) via a first signal path (SW1) in which the transferred sample values are divided by four, that the first terminal (1) is connected to the output adder (3) via a third signal path (SW3) in which the transferred sample values are divided by eight and delayed (V0) by one line period less one sampling period, and via a fourth signal path (SW4) in which they are divided by eight and delayed (V0, V2) by one line period plus one sampling period, and that the second terminal (2) is connected to the output adder (3) via a second signal path (SW2) in which the transferred sample values are divided by two and delayed (V1, V0) by one line period.

5. A transmit filter as claimed in Claim 4, characterized in that the delay by one line period in the second signal path (SW2) is produced in two delay lines the first of which (V1) privides a delay equal to one sampling period and the second of which (V0) provides a delay equal to one line period less one sampling period, that the delay in the third signal path (SW3) is produced in said second delay line (V0) and that the delay in the fourth signal path (SW4) is produced in a delay line (V2) providing a delay equal to two sampling periods and in said second delay line (V0).

6. A transmit filter as claimed in Claim 5, characterized in that the sample values of the third signal path (SW3), which are not delayed and are divided by eight, and the sample values of the fourth signal path (SW4), which are delayed by two sampling periods (V2) and divided by eight, are added together in a first adder (4), and that the sum values thus obtained are added, in a second adder (5) inserted in the second signal path (SW2) between the first delay line (V1) and the second delay line (V0), to the sample values of the second signal path (SW2) appearing at the output of the first delay line (V1), which were divided by two and delayed by one sampling period.

7. Receive filter of a system as claimed in any one of Claims 1 to 3, characterized in that it has a switch (SE) which alternately transfers a received numerical value and a calculated numerical value of the filtered picture signal to the filter output, that a first terminal (11) of the switch (SE) is connected to the input of the receive filter via a signal path (SW1) in which the received numerical values are delayed (VE1) by one sampling period, and that a second terminal (22) of the switch (SE) is connected to the output of an adder (33) whose input values are the value divided by four, the value divided by four and delayed by two sampling periods and the value divided by two and delayed by one line period plus one sampling period.

8. A receive filter or transmit filter as claimed in Claim 7 or any one of Claims 4 to 6, characterized in that it is used to filter two like signals (U, V) in a time-division multiplex mode.

## Revendications

1. Système pour la transmission numérique de signaux d'image, en particulier de signaux vidéo de télévision, à un débit binaire réduit, sur le trajet de transmission, dont la partie d'émission transmet seulement un groupe de bits, à la place d'une valeur d'échantillon sur deux dans les directions horizontale et verticale de l'image, et dont la partie de réception reconstruit approximativement les valeurs d'échantillons à la place desquelles aucune information n'a été transmise, à partir des groupes de bits transmis, caractérisé en ce que, à l'extrémité d'émission, le groupe de bits transmis est obtenu par filtrage numérique des valeurs d'échantillons originales dans un filtre d'émission (fig. 2) et possède le même nombre de bits que chacune des valeurs d'échantillons et en ce que la partie de réception continent un filtre de réception (fig. 3) qui dérive les valeurs d'échantillons à reconstruire par filtrage numérique des groupes de bits transmis, les deux filtres filtrant conjointement les images transmises, de façon telle que la résolution horizontale soit sensiblement conservée, tandis que la résolution dans la direction des deux diagonales est réduite.

2. Système conforme à la revendication 1, caractérisé en ce que le groupe de bits transmis par le filtre de transmission (fig. 2), à la place d'une valeur d'échantillon ($X_{2i}^{2j}$) sur deux, dans les directions horizontale et verticale, représente une valeur numérique ($C_{2i}^{2j}$) égale à la somme de fractions de ladite valeur d'échantillon ($X_{2i}^{2j}$) et de valeur d'échantillons d'éléments d'image environnant ladite valeur d'échantillon, et en ce que les éléments d'image ($X'^{2j+1}_{2i}$) qui doivent être insérés dans l'image reçue entre les éléments d'image à la place desquels des groupes de bits ont été transmis sont calculés par le filtre de réception comme des sommes de fractions de valeurs numériques reçues pour des éléments d'image adjacents (fig. 1).

3. Système conforme à la revendication 2, caractérisé en ce que la somme ($C_{2i}^{2j}$) transmise par le filtre de transmission consiste en la moitié de la valeur d'échantillon respective ($X_{2i}^{2j}$), un huitième de la valeur d'échantillon de l'élément d'image voisin de gauche ($X_{2i}^{2j-1}$), un huitième de la valeur d'échantillon de l'élément d'image voisin de droite ($X_{2i}^{2j+1}$) et un quart de la valeur d'échantillon de l'élément d'image voisin de dessous ($X_{2i+1}^{2j}$) et en ce que la somme ($X_{2i}^{2j+1}$) calculée par le filtre de réception pour un élément d'image à insérer consiste en la moitié de la valeur numérique du groupe de bits reçu de l'élément d'image voisin de dessus ($C_{2i+1}^{2j+1}$), un quart de la valeur numérique du groupe de bits reçu de l'élément d'image voisin de gauche ($C_{2i}^{2j}$) et un quart de la valeur numérique du groupe de bits reçu de l'élément d'image voisin de droite ($X_{2i}^{2j+2}$).

4. Filtre de transmission pour un système conforme à l'une quelconque des revendications précédentes, caractérisé en ce qu'il comprend un commutateur d'entrée (S), transférant tour à tour les valeurs d'échantillons à filtrer à une première borne (1) et à une deuxième borne (2), un additionneur de sortie (3) fournissant les groupes de bits formés par filtrage, à intervalles de deux périodes d'échantillonnage du signal à filtrer et en même temps que les états «un» sur la première borne (1), en ce que la première borne (1) est connectée à l'additionneur de sortie (3) par un premier trajet de signal (SW1), dans lequel les valeurs d'échantillons transférées sont divisées par quatre, en ce que la première borne (1) est connectée à l'additionneur de sortie (3) par un troisième trajet de signal (SW3), dans lequel les valeurs d'échantillons transférées sont divisées par huit et retardées (V0) d'une période de ligne, moins une période d'échantillonnage, et par un quatrième trajet de signal (SW4) dans lequel les valeurs d'échantillons transférées sont divisées par huit et retardées (V0, V2) d'une période de ligne, plus une période d'échantillonnage, et en ce que la deuxième borne (2) est connectée à l'additionneur de sortie (3) par un deuxième trajet de signal (SW2) dans lequel les valeurs d'échantillons transférées sont divisées par deux et retardées (V1, V0) d'une période de ligne.

5. Filtre de transmission conforme à la revendication 4, caractérisé en ce que le retard d'une période de ligne, dans le deuxième trajet de transmission (SW2) est produit par deux lignes à retard, dont la première (V1) fournit un retard égal à une période d'échantillonnage et dont la seconde (V0) fournit un retard à une période de ligne, moins une période d'échantillonnage, en ce que le retard dans le troisième trajet de signal (SW3) est produit par ladite deuxième ligne à retard (V0) et en ce que le retard dans le quatrième trajet de signal (SW4) est produit par une ligne à retard (V2) produisant un retard égal à deux périodes d'échantillonnage et par ladite deuxième ligne à retard (V0).

6. Filtre de transmission conforme à la revendication 5, caractérisé en ce que les valeurs d'échantillons du troisième trajet de signal (SW3), qui ne sont pas retardées et sont divisées par huit, et les valeurs d'échantillons du quatrième trajet de signal (SW4), qui sont retardées de deux périodes d'échantillonnage (V2) et qui sont divisées par huit, sont additionnées l'une à l'autre dans un premier additionneur (4) et en ce que les valeurs de somme ainsi obtenues sont additionnées, dans un deuxième additionneur (5) inséré dans le deuxième trajet de signal (SW2) entre la première ligne à retard (V1) et la deuxième ligne à retard (V0), aux valeurs d'échantillons du deuxième trajet de signal (SW2) apparaissant à la sortie de la première ligne à retard (V1), qui étaient divisées par deux et retardées d'une période d'échantillonnage.

7. Filtre de réception pour un système conforme à l'une quelconque des revendications 1 à 3, caractérisé en ce qu'il comprend un commutateur (SE) qui transfère alternativement une valeur numérique reçue et une valeur numérique calculée du signal d'image filtré, à la sortie du filtre, en ce qu'une première borne (11) du commutateur (SE) est connectée à l'entrée du filtre de réception par un premier trajet de signal (W1) dans lequel les valeurs numériques reçues sont retardées (VE1) d'une période d'échantillonnage, et en ce que une deuxième borne (22) du commutateur (SE) est connectée à la sortie d'un additionneur (33) dont les valeurs d'entrée sont la valeur d'entrée divisée par quatre, la valeur d'entrée divisée par quatre et retardée de deux périodes d'échantillonnage et la valeur d'entrée divisée par deux et retardée d'une période de ligne plus une période d'échantillonnage.

8. Filtre de réception ou filtre de transmission conforme à la revendication 7 ou à l'une quelconque des revendications 4 à 6, caractérisé en ce qu'il est utilisé pour filtrer deux signaux semblables (U, V) par multiplexage temporel.

Fig.1a    Fig.1b    Fig.1c

0 090 236

Fig.2

Fig.3